# FASCICULE DE BREVET EUROPEEN

(11) **EP 1 066 532 B1**
(45) Date de publication et mention de la délivrance du brevet: **03.07.2002**
(21) Numéro de dépôt: 99910452.4
(22) Date de dépôt: 29.03.1999
(51) Int. Cl.: G01N 35/10, B01L 3/02

(54) **PROCEDE DE PRELEVEMENT D'UN ECHANTILLON BIOLOGIQUE**
VERFAHREN ZUR PROBENENTNAHME EINER BIOLOGISCHEN PROBE
BIOLOGICAL SAMPLING METHOD

(30) Priorité: 01.04.1998 FR 9804144; 22.06.1998 FR 9807884
(43) Date de publication de la demande: 10.01.2001
(73) Titulaire: BIOMERIEUX SA, F-69280 Marcy L'Etoile (FR)
(72) Inventeur: COLIN, Bruno, F-69280 Marcy l'Etoile (FR); JARAVEL, Cécile, F-69280 Marcy l'Etoile (FR); PRIVAT, Marie, F-69560 Saint Romain en Gal (FR)
(74) Mandataire: Bonneau, Gérard
(86) Numéro de dépôt international: FR9900728
(87) Numéro de publication internationale: WO9950674

(56) Documents cités:
- EP-A- 0 341 438
- EP-A- 0 571 100
- US-A- 4 846 003
- US-A- 5 723 795

## Description

La présente invention concerne un procédé de prélèvement d'un échantillon biologique par l'intermédiaire d'un appareil d'aspiration-refoulement, tel qu'une pipette, manuel ou automatique, incorporé ou non à un automate. Elle concerne également un procédé de détection de la surface libre d'un échantillon biologique ou d'un solide par l'intermédiaire d'un appareil d'aspiration-refoulement manuel ou automatique, incorporé ou non à un automate. Enfin, elle concerne un appareil de prélèvement d'un échantillon, tel qu'une pipette, et un appareil de détection de la surface libre d'un échantillon biologique ou d'un solide. Quel que soit l'appareil concerné, celui-ci peut être manuel ou automatique, incorporé ou non à un automate.

Il s'agit d'une nouvelle méthode de détection de niveau de liquide biologique dans une cuvette ou tube d'analyse tout particulièrement nécessaire sur analyseur automatique.

*L'état de la technique montre que de nombreuses méthodes sont souvent utilisées sur d'autres automates.*

*Ces méthodes peuvent être électriques.*

*Premièrement, c'est le cas de l'aiguille métallique non jetable, qui remplit la fonction d'électrode, la deuxième électrode étant le liquide dans lequel l'aiguille va plonger. Lorsque cette aiguille rentre en contact avec l'échantillon biologique une variation d'impédance, capacitance ou résistance, après amplification, déclenche l'arrêt du moteur de descente d'aiguille.*

*Deuxièmement, on peut utiliser un cône ou embout conducteur qui est enfichable et donc jetables après chaque prélèvement par la pipette associée au cône. Ces derniers sont fabriqués dans un matériau plastique chargé en particules de carbone, la liaison électrique est assurée par le préhenseur de cônes qui lui sera obligatoirement métallique.*

*Troisièmement, d'autres systèmes fonctionnent par l'addition à l'aiguille ou au cône de prélèvement de deux électrodes flanquées, de part et d'autre de l'aiguille ou du cône, et assurant la conduction électrique lorsque ces électrodes entrent en contact avec le liquide biologique. Cette dernière variante présente le défaut majeur de contaminer les électrodes à chaque fois qu'elles entrent en contact avec un nouveau liquide biologique, nécessitant dans ce cas l'adjonction d'un système de lavage décontaminant.*

*Ces méthodes peuvent être optiques.*

*Premièrement, on peut utiliser une caméra visualisant le niveau de liquide et l'entrée en contact de l'aiguille avec le liquide.*

*Deuxièmement, on peut également utiliser un système optoélectronique c'est-à-dire qu'un photo détecteur détecte le niveau de liquide et l'amerrissage de l'aiguille ou de la pointe de prélèvement dans le liquide.*

Selon tous les modes de réalisation des moyens de prélèvement, associés à des moyens électriques ou optiques, lors du prélèvement, l'aiguille ou l'embout de prélèvement plonge dans l'échantillon biologique à prélever. Si l'aiguille ou pointe rentre trop profondément dans le liquide de l'échantillon, il y a, d'une part, un risque de contamination par l'extérieur de l'aiguille et, d'autre part, un problème de « surdose », c'est-à-dire que la quantité de liquide biologique ayant mouillée la paroi externe de l'aiguille ou de la pointe sera tout ou partiellement déposée après transfert dans le fond de la cuvette d'analyse faussant ainsi l'exactitude de la dose répartie.

*Pourtant, il existe des techniques permettant d'éviter la contamination de l'embout utilisé par le liquide prélevé.*

*Ces méthodes peuvent être sonores. Ainsi, le brevet US-A-4,846,003 décrit une système de détection qui utilise une caractéristique sonore émise par un haut-parleur et reçu par un microphone. La valeur mesurée est constituée par l'impédance acoustique.*

*D'autres documents, tels que EP-A-0.341.438, US-A-5,723,795 et EP-A-0.571.100, préconisent l'utilisation de capteurs de pression. Il consiste à détecter une variation de la pression, dès que l'extrémité libre de l'embout arrive en contact avec la surface d'un liquide.*

Néanmoins, les capteurs de ces appareils sont associés avec des mouvements d'air toujours uniformes et unidirectionnels. Ils ne permettent pas d'évaluer les nombreuses caractéristiques selon la présente invention. Ainsi, l'invention a non seulement pour objectif de détecter une surface, liquide ou solide, la défectuosité d'un embout, des problèmes de fuites, mais également de détecter et de faire la distinction entre la présence d'une bulle ou de mousse à la surface de l'échantillon liquide à détecter ou à prélever, ou encore d'une bulle ou d'une impureté solide ou ayant une autre densité dans ledit échantillon. D'ailleurs, la présente invention peut tout à fait servir de viscosimètre, puisqu'il existe une relation entre la durée du prélèvement, la dépression créée au sein de la pipette et mesurée par un capteur de pression, et la viscosité du liquide prélevé. La demanderesse a d'ailleurs déposé une demande de brevet à ce sujet, sous le numéro FR98/01376, en date du 2 février 1998, et concernant : « Procédé et dispositif de mesure de la viscosité d'un liquide et utilisation d'une pipette comme viscosimètre ». Le contenu de cette demande de brevet est incorporée à la présente invention.

De plus les techniques actuelles, qui évite à l'aiguille ou l'embout de prélèvement de plonger trop profondément dans un échantillon biologique à prélever, nécessite la présence de moyens de détection complexes (caméra, embouts en carbone, etc.) de la surface libre de l'échantillon, moyens qui sont donc onéreux et rendent leur diffusion sur le marché confidentielle.

L'invention propose donc de solutionner l'ensemble de ces problèmes en proposant des procédés et appareils simples à mettre en oeuvre. Ceux-ci permettent de supprimer au maximum tous les contacts électriques sources de problèmes, d'utiliser des embouts jetables non conducteurs donc moins coûteux et moins critiques à fabriquer, et de réutiliser un capteur déjà disponible pour la détection de bouchage d'aiguille

A cet effet, la présente invention concerne un procédé de prélèvement d'un échantillon biologique par l'intermédiaire d'un appareil d'aspiration-refoulement, tel qu'une pipette, manuel ou automatique, incorporé ou non à un automate, caractérisé en ce qu'il consiste :
- à actionner un moyen engendrant une variation de pression et/ou un flux d'air au sein de l'appareil,
- à positionner l'extrémité inférieure libre dudit appareil d'aspiration-refoulement de manière à ce qu'elle affleure la surface libre de l'échantillon biologique,
- à détecter la variation de pression et/ou un flux d'air au sein de l'appareil d'aspiration-refoulement, due à l'affleurement de l'extrémité inférieure libre dudit appareil à la surface libre de l'échantillon biologique, et
- à prélever une quantité dudit échantillon par aspiration au moyen de l'appareil en position d'affleurement ainsi que les parois latérales extérieures de l'appareil ne soient souillées par ledit échantillon autrement que par ce qui est dû au caractère plus au moins mouillant dudit échantillon.

Dans tous les cas de figure, la variation de volume aspiré-refoulé est comprise entre quelques nanolitres (nl) et quelques microlitres (il), et/ou la variation constante de pression; autrement appelée fréquence, est comprise entre quelques Hertz et quelques centaines de Hertz (Hz).

Dans tous les cas de figure, le flux d'air est compris entre 10 et 50 µl par seconde, et préférentiellement de 20 à 30 µl par seconde.

De plus, une variation de pression différente de la variation de pression normalement créée par le moyen engendrant cette variation, avant l'affleurement, permet de détecter :
- une anomalie de l'embout de prélèvement,
- la présence dudit embout sur la pipette, et/ou
- la présence d'au moins une bulle d'air dans ou à la surface de l'échantillon.

De même, une variation de pression par rapport à la pression mesurée, lorsque le flux d'air est créé, permet de détecter :
- au moins une bulle d'air, dans le cas où un plateau de pression est détecté après une première variation de pression, ou
- une surface libre d'un liquide, dans le cas où une seconde variation de pression succède à la première variation de pression, ou
- une surface d'un solide dans le cas, où il n'y a qu'une augmentation de pression.

Une variation de pression doit être interprétée comme étant constituée par une augmentation de pression suivie d'une diminution de pression ou par une diminution de pression suivie d'une augmentation de pression, ce qui génère un pic.

L'invention concerne encore un appareil de prélèvement d'un échantillon biologique, tel qu'une pipette, manuel ou automatique, incorporé ou non à un automate comportant,
- au moins un moyen engendrant une variation de pression ou un flux d'air au sein de l'appareil au repos,
- au moins un capteur de pression pour mesurer, d'une part, la variation de pression au repos ou une pression différente de cette variation de pression ou, d'autre part, une pression différente de la pression créée par le flux d'air, au sein de l'appareil, et
caractérisé par le fait qu'il comporte:
- des moyens d'analyse des paramètres de mesure du ou des capteurs pour permettre le prélèvement, lorsque l'extrémité inférieure libre dudit appareil d'aspiration-refoulement affleure la surface libre de l'échantillon biologique, sans que les parois latérales extérieures de l'appareil ne soient souillées par ledit échantillon autrement que par ce qui est dû éventuellement au caractère plus au moins mouillant de l'échantillon.

Selon un mode particulier de réalisation l'appareil de détection de la surface libre d'un échantillon biologique ou d'un solide est manuel ou automatique, incorporé ou non à un automate ; il comporte :
- au moins un moyen engendrant une variation de pression ou un flux d'air au sein de l'appareil au repos,
- au moins un capteur de pression pour mesurer, d'une part, la variation de pression au repos ou une pression différente de cette variation de pression, ou, d'autre part, une pression différente de la pression créée par le flux d'air, au sein de l'appareil, et
- des moyens d'analyse des mesures du ou des capteurs pour détecter l'affleurement de l'extrémité inférieure libre de l'appareil d'aspiration-refoulement par rapport à la surface libre de l'échantillon biologique ou du solide.

Le moyen engendrant une variation de pression est constitué par un tube souple pouvant être compressé et décompressé régulièrement par tout mécanisme de mouvement alternatif, tel qu'une came, un maneton, associé à un moteur.

Le moyen engendrant le flux d'air est constitué par le piston de la pipette, lorsque celui-ci éjecte l'air à l'extérieur de ladite pipette.

L'extrémité inférieure libre de l'appareil est constituée par un embout jetable.

L'invention concerne aussi un procédé de détection d'un bouchage partiel ou total au niveau d'un appareil manuel ou automatique de prélèvement (1) d'un échantillon biologique (2), consistant
- à actionner un moyen engendrant une variation de pression et/ou un flux d'air au sein de l'appareil, et
- à mesurer une variation de pression différente de la variation de pression normale au sein de l'appareil due au bouchage partiel ou total de l'extrémité inférieure libre dudit appareil.

Les dessins ci-joints sont donnés à titre d'exemples d'un mode préférentiel de réalisation de la présente invention.

La figure 1 représente une vue schématique d'un appareil de prélèvement ou de détection de niveau (surface libre) selon l'invention qui permet la mise en oeuvre du procédé de prélèvement ou de détection et utilise un moyen engendrant une variation de pression.

La figure 2 représente une vue du signal électrique à la sortie du capteur de pression visualisée par un oscilloscope, lors de l'utilisation d'un appareil selon la figure 1 dans le cas d'un liquide non mouillant.

La figure 3 représente une vue identique à la figure 2 dans le cas d'un liquide mouillant.

La figure 4 représente un détail D de la figure 3.

La figure 5 représente une vue en coupe au niveau de l'extrémité inférieure de l'embout qui affleure la surface d'un liquide non mouillant.

La figure 6 représente une vue identique à la figure 5 dans le cas d'un liquide mouillant.

La figure 7 représente une vue d'un signal électrique classique à la sortie du capteur de pression visualisée par un oscilloscope.

La figure 8 représente une vue d'un signal électrique identique à celui de la figure 7 mais perturbé par la présence de nombreuses petites bulles à la surface de l'échantillon constituant une mousse.

La figure 9 représente une vue d'un signal électrique identique à la figure 7 mais perturbé par la présence d'une bulle d'air à l'intérieur de l'échantillon, bulle d'air qui est aspiré par l'appareil d'aspiration-prélèvement.

La figure 10 représente une vue schématique d'un appareil de prélèvement ou de détection de niveau selon l'invention, qui permet la mise en oeuvre du procédé de prélèvement ou de détection et utilise un moyen engendrant un flux d'air.

La figure 11 représente une vue du signal électrique à la sortie du capteur de pression visualisée par une oscilloscope, lors de l'utilisation d'un appareil selon la figure 10, l'embout entrant directement en contact avec la surface libre d'un liquide.

La figure 12 représente une vue identique à la figure 11 dans le cas où l'embout entre indirectement en contact avec la surface libre d'un liquide puisqu'il y a des bulles.

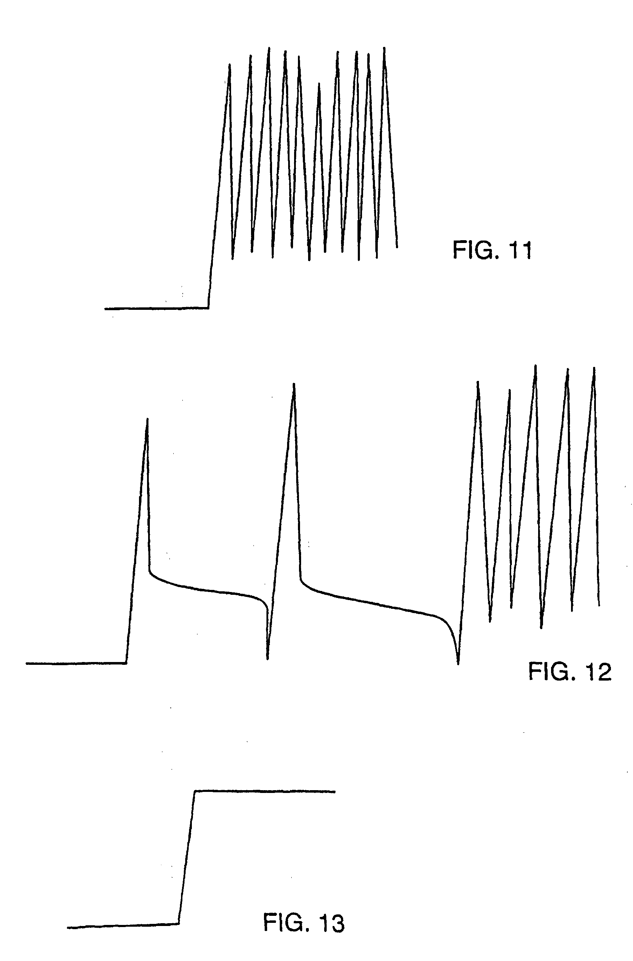

Enfin, la figure 13 représente une vue identique aux figures 11 et 12 dans le cas où l'embout entre en contact avec la surface libre d'un solide.

Dans la suite du texte, il faut comprendre le terme affleurer comme étant un équivalent de entrer en contact. Un embout étant assimilé sensiblement à un tube creux, l'affleurement est donc synonyme de contact entre l'extrémité inférieure libre de l'embout et la surface libre de l'échantillon biologique à prélever ou éventuellement de la surface à détecter, sans que les parois latérales extérieures dudit embout ne soit souillées par l'échantillon. En fait, les parois latérales intérieures ou extérieures sont ou non souillées, avant le prélèvement, selon que ledit échantillon biologique est un liquide mouillant ou non-mouillant. En fait l'affleurement doit pouvoir permettre le prélèvement sans création de bulles d'air ou autre gaz en souillant le moins possible l'extérieur de l'embout.

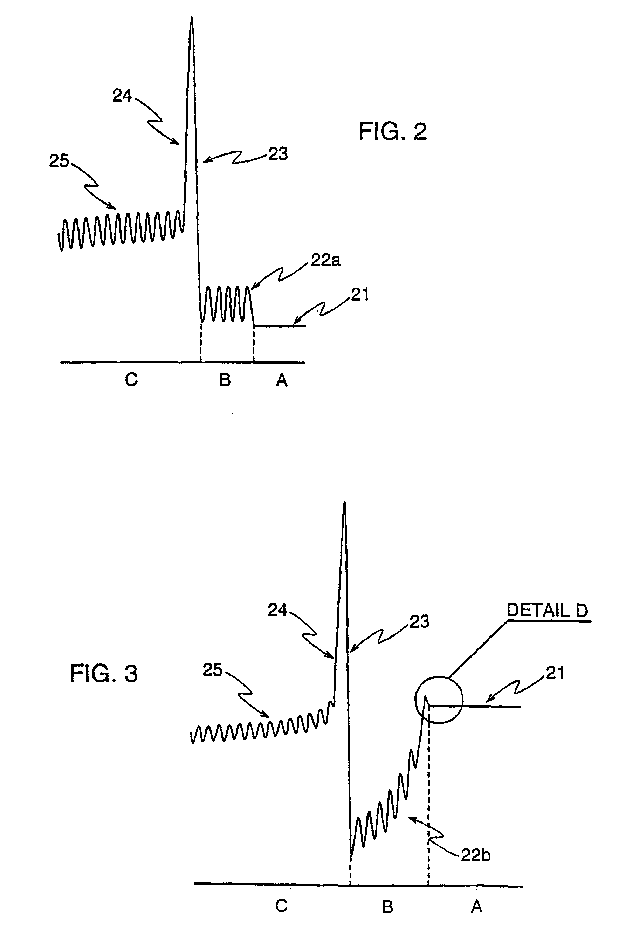

Il convient de noter tout d'abord, pour une bonne compréhension des figures 2 à 4 et 7 à 9, que le temps s'écoule de la droite vers la gauche de chaque feuille, et que la position située au-dessus de la ligne de base 21 correspond à une dépression alors que la position située au-dessous de la ligne de base 21 correspond à une surpression.

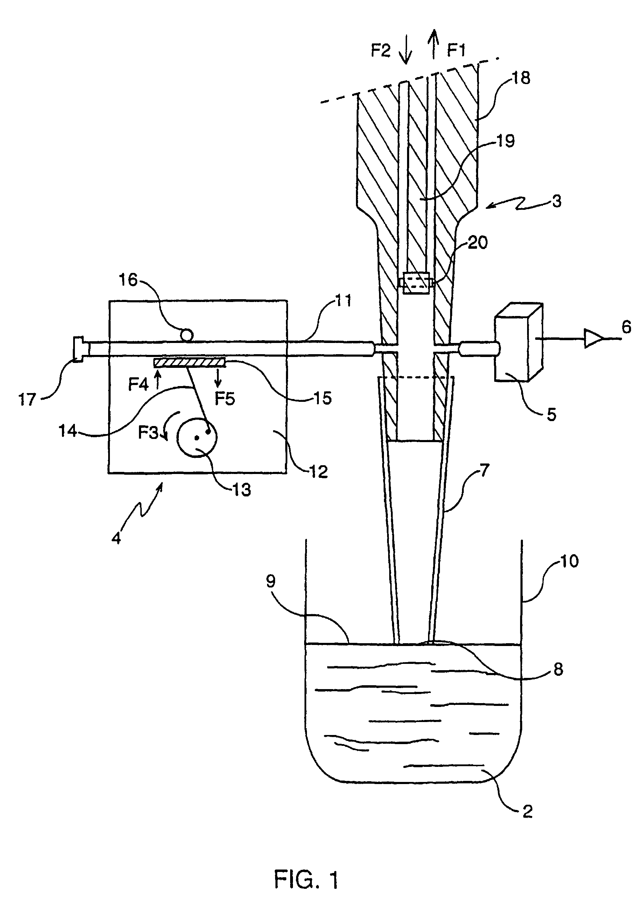

Selon la figure 1, un appareil de prélèvement 1, selon la présente invention, est bien représenté.

Cet appareil 1 est essentiellement constitué par une pipette 3 qui permet le prélèvement d'un échantillon biologique 2 contenu à l'intérieur d'une cuvette d'analyse 10.

La pipette 3 est essentiellement constituée d'un corps extérieur 18 contenant un piston 19. La mobilité du piston 19, selon F1 et F2, à l'intérieur du corps 18 de la pipette 3, permet respectivement l'aspiration et le rejet du liquide à prélever 2. Bien entendu, il y a présence de joins d'étanchéité 20 entre le piston 19 et le corps 18 de la pipette 3.

De manière classique également, on dispose à l'extrémité libre du corps de la pipette 18, un embout 7, également appelé cône ou pointe de prélèvement.

Un des problèmes essentiels lorsque l'on effectue le prélèvement d'un liquide biologique 2 consiste dans le fait que la quantité prélevée varie en fonction des caractéristiques de mouillabilité du liquide 2. Cette variabilité du volume prélevé, même si elle est faible, peut avoir des conséquences sur les résultats des analyses effectuées. Il y a donc une réelle nécessité de gommer les différences des volumes prélevés lorsque l'échantillon biologique 2 est un liquide mouillant ou non.

Pour ce faire la présente invention propose d'associer à la pipette 3 précédemment décrite, un moyen permettant d'engendrer une variation de pression, référencée globalement 4 sur la figure 1. A ce moyen engendrant une variation de pression 4 est également associé un capteur de pression 5 qui mesure la pression et les variations de pression lors de l'utilisation de la pipette 3. Bien entendu, pour que l'ensemble de ces constituants fonctionne, il y a nécessité d'utiliser des moyens d'analyse 6 des paramètres de mesure issus du capteur 5 pour permettre le prélèvement dans des conditions optimales qui seront décrites ci-après.

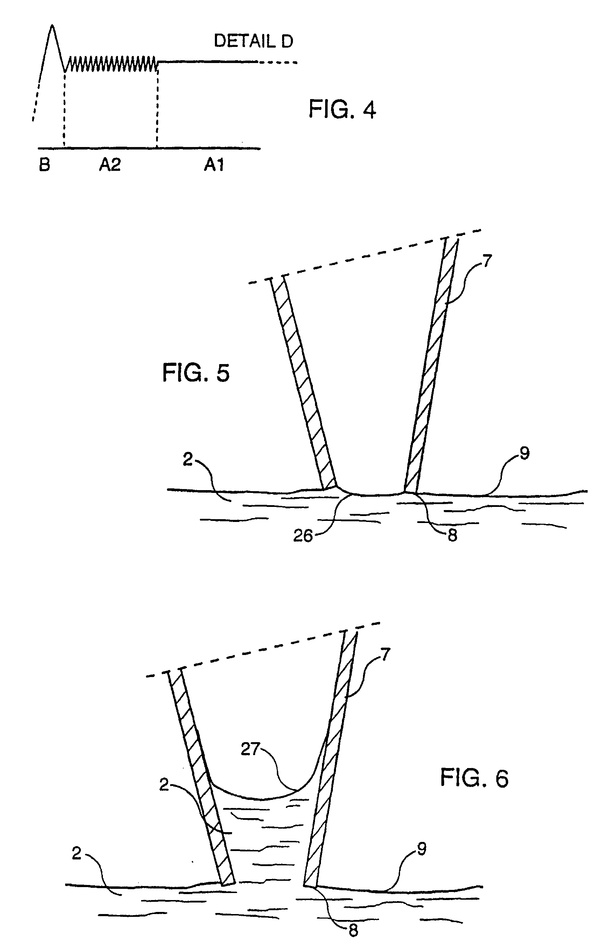

Ces conditions optimales de prélèvement sont celles dans lesquelles l'extrémité inférieure libre 8 de l'embout 7 se situe au niveau de la surface libre 9 de l'échantillon biologique 2 à prélever, comme cela est bien représenté à la figure 1 mais également sur les figures 5 et 6. Dans cette configuration, il est bien entendu évident que le cône 7 ne sera pas souillé, au niveau de sa surface extérieure, par le liquide à prélever 2. Cette caractéristique permet d'éviter une première source d'erreur.

D'autre part, si l'on se reporte aux figures 5 et 6, on remarque qu'il y a une grande différence entre les échantillons biologiques 2 à prélever selon que ceux-ci sont ou non des liquides mouillants c'est-à-dire ayant la propriété de s'étendre sur une surface entrant en contact avec de tels liquides.

Dans le cas d'un liquide 2 non mouillant comme représenté à la figure 5, celui-ci 2 reste à l'extérieur de l'embout 7 et la surface libre 26 dudit échantillon 2 au sein de la pipette 3 ne pénètre pas dans celle-ci 3.

Dans le cas d'un liquide 2 mouillant, celui-ci 2 pénètre à l'intérieur de l'embout 7, de façon plus ou moins importante selon la mouillabilité dudit liquide 2. La surface libre 27 de l'échantillon 2 est alors positionnée au sein de la pipette 3.

Bien entendu les courbes des figures 2 et 3, correspondant respectivement aux deux possibilités des figures 5 et 6, sont modifiées selon la nature mouillante ou non de l'échantillon biologique 2. Ainsi le signal 22a, lorsque l'extrémité 8 est en contact de la surface libre 9 d'un liquide non mouillant avant aspiration, se différencie du signal 22b, lorsque l'extrémité 8 est en contact de la surface libre 9 d'un liquide mouillant également avant aspiration.

La différence réside dans le fait que le signal 22a est situé au-dessus de la ligne de base 21 correspondant à la pression atmosphérique alors que le signal 22b est situé au-dessous de cette ligne 21

L'objet de la présente invention est donc également de détecter la surface libre 9 d'un échantillon 2 que celui-ci soit mouillant ou non.

Pour ce faire, l'intérieur de l'embout 7 est associé à la fois au capteur de pression 5 et au moyen engendrant une variation de pression 4. Selon un mode de réalisation représenté à la figure 1, le moyen engendrant une variation de pression 4 est constitué par un support 12 qui peut éventuellement être intégré dans un automate, non représenté sur les figures. Ce support 12 est constitué, par exemple, par la carcasse ou la structure de l'automate.

Cette structure 12 fait office de support pour un vilebrequin 13 auquel il est relié par un axe de rotation. Le vilebrequin 13 est également associé à l'une des extrémités d'une bielle 14. L'autre extrémité de cette bielle 14 est quant à elle reliée à un galet presseur 15 dont le mouvement sera alternatif selon F4 et F5 pour permettre la compression entre le galet presseur 15 et une enclume 16 d'un tuyau souple 11.

L'enclume 16 est en fait solidaire du support 12 et ne peut pas bouger, ce qui n'est pas le cas du galet presseur 15. Le tuyau souple 11 quant à lui, comporte deux extrémités; une première extrémité est bouchée par l'intermédiaire d'un bouchon 17 alors que l'autre extrémité est reliée mécaniquement à la pipette 3. Plus précisément, l'intérieur du tuyau souple 11 est en relation directe avec l'intérieur de la pipette 3 au niveau de l'espace délimité par le corps de la pipette 18, le piston 19 et l'embout 7. Il est donc facile de comprendre que le moteur non représenté sur les figures va actionner en rotation, selon F3, le vilebrequin 13, le mouvement du galet presseur 15 s'effectuera selon F4 puis F5 pour permettre, d'une part, la compression et, d'autre part, la décompression du tuyau souple 11 contre l'enclume 16. Lorsque le mouvement du galet 15 s'effectuera selon F4, le tuyau 11 sera pressé et il y aura un flux d'air qui arrivera au sein de la pipette 3. Lorsqu'au contraire le galet presseur 15 s'effectuera selon F5, la pression exercée sur le tuyau 11 sera éliminée et ledit tuyau 11 pourra réaspirer l'air qui avait été injecté à l'intérieur du corps 18 de la pipette 3. Le mouvement du galet presseur 15 est en moyenne de quelques Hertz à quelques centaines de Hertz. Le tuyau 11 est choisi pour que le volume déplacé c'est-à-dire aspiré et refoulé soit de quelques nanolitres à quelques microlitres.

Il est donc aisé de comprendre, en rapport avec les figures 2 et 3, que chaque signal transmis par le capteur de pression 5 comporte essentiellement trois zones bien définies : A, B et C.

Dans le cas de la zone A, le signal électrique à la sortie du capteur 5 correspond à la position avant qu'il y ait contact entre l'extrémité 8 de l'embout 7 et l'échantillon 2. Dans le cas de la zone B, le signal du capteur 5 correspond à la position après qu'il y ait eu contact entre l'extrémité 8 et l'échantillon 2, mais avant aspiration par la pipette 3. Dans le cas de la zone C enfin, le signal correspond à la position après contact entre l'extrémité 8 et l'échantillon 2, mais après aspiration.

En fait le signal dans la zone A est plus compliqué et se décompose en deux zones A1 et A2, comme représentée à la figure 4 qui est un détail de la figure 3. Cette décomposition existe également dans le cas de la figure 2. La zone A1 correspond à un signal de mesure de la pression atmosphérique avant que le moyen 4 engendrant une variation de pression ne soit mis en fonctionnement. La zone A2 correspond à un signal de mesure de la pression atmosphérique après que le moyen 4 engendrant une variation de pression ait été mis en fonctionnement. Ainsi le signal A1 est complètement plat, alors qu'avec A2, il y a une légère amplitude due aux mouvements de l'air selon F4 et F5.

Cette technique permet ainsi de détecter la surface libre 9 d'un échantillon biologique 2 quelle que soit la nature mouillante ou non mouillante de cet échantillon 2.

La présente invention concerne donc un procédé de prélèvement d'un échantillon biologique 2 par l'intermédiaire d'un appareil d'aspiration-refoulement, un procédé de détection de la surface libre 9 d'un échantillon biologique 2 par l'intermédiaire, éventuellement, de ce même appareil. Enfin, elle concerne un appareil de prélèvement 1 d'un échantillon 2, tel qu'une pipette 3, et un appareil de détection de la surface libre d'un échantillon biologique.

Ces nouveaux procédés et appareils de détection de niveau de liquide biologique dans une cuvette ou tube d'analyse sont tout particulièrement nécessaires pour les analyseurs automatiques.

En fait, lorsqu'un embout, pointe ou cône de prélèvement 7 rentre en contact avec un liquide 2, tel que sérum ou réactif biologique, une légère surpression est générée à l'intérieur de l'embout 7. Ceci est lié et dépendant de la mouillabilité des embouts 7, ainsi qu'aux tensions hydrostatiques des différents liquides prélevés 2.

Cette augmentation de pression, typiquement de quelques centaines de micro bars, est détectable à l'aide, par exemple, d'un capteur 5 issu de la technologie de micro usinage standard dans le commerce. Ce phénomène de micro capillarité est présent dans la majorité des liquides biologiques. cependant certains liquides peu mouillants mettent en défaut ce concept décrit ci-dessus puisque ce liquide, comme son nom l'indique, ne rentre pas spontanément dans la pointe de prélèvement 7, et ne génère pas une petite surpression nécessaire au fonctionnement du capteur 5, d'où la recherche d'un marqueur de présence de liquide.

L'invention consiste donc à injecter dans l'espace d'air emprisonné dans l'embout 7 de prélèvement un flux d'air. Ce flux d'air injecté, perturbant la précision du mécanisme de prélèvement, est réaspiré instantanément. On obtient alors un système de va-et-vient d'une petite quantité d'air d'environ une fraction de micro litre, voir les courbes des figures 2 à 4 et 7 à 9.

Cette quantité est suffisamment petite en regard des quantités d'air en mouvement assurant la bonne volumétrie nécessaire au pompage de la dose liquide. Ce flux d'air est injecté puis réaspiré à une vitesse suffisamment rapide pour qu'elle n'ait pas d'effet sur le déplacement du liquide se trouvant à l'orifice de la pointe de prélèvement, ainsi le cycle aspiration/refoulement est exécuté en un temps de quelques millisecondes. Le capteur de pression 5, lui, réagit à une vitesse de l'ordre de 100 micro secondes. A cette vitesse, le liquide n'est pas capable de rentrer dans l'embout 7.

Ce système trouve une utilisation particulièrement intéressante dans le cas de liquide à faible tension superficielle qui entre en contact avec l'orifice de la pointe de prélèvement 7. De plus, avantageusement, cette invention permet de qualifier la géométrie de l'extrémité du cône puisque si cette extrémité présente des aspérités dues par exemple à un mauvais moulage le micro flux d'air entrant et sortant est perturbé se traduisant par une modification de la variation de pression décelable aisément à l'aide de ce même capteur de pression 5.

Les flux et reflux d'air sont générés par l'intermédiaire d'une micro pompe 4 fonctionnant sur le principe bielle manivelle comprimant un micro tuyau 11 en silicone, par exemple, dont le canal capillaire intérieur est de petit diamètre de l'ordre de quelque dixième de millimètres.

Ainsi à chaque tour de moteur, le tuyau 11 est alternativement déformé et restauré dans sa forme initial, générant ainsi respectivement un flux et un reflux d'air. Ces flux et reflux d'air sont transmis, via le tuyau, à la chambre interne de l'embout de prélèvement 7.

A ce propos, l'une des deux extrémités du tuyau 11 est reliée à ladite chambre interne de l'embout de prélèvement 7. L'autre extrémité de ce tuyau 11 est obturée à l'aide d'un bouchon 17. Le capteur de pression 5, lui, est en liaison directe avec le canal d'air du mécanisme de pompage de la pipette, la pipette est d'un type standard fonctionnant suivant le principe connu du déplacement d'un matelas.

Selon un exemple représenté à la figure 2, les différents types de signaux électroniques issus du micro capteur de pression 5 sont standards et exploitables par n'importe quel micro ordinateur programmé pour détecter un signal de quelques millivolts devenant instantanément (quelques millisecondes) quelques centaines de millivolts.

Il est également possible de faire varier le volume d'air de flux et de reflux, par exemple de quelques fractions de micro litres à quelques micro litres, ainsi que de faire varier la fréquence de pulsation, permettant de pulser ledit volume d'air, de quelques dizaines de Hertz à quelques centaines de Hertz, sans pour autant sortir du cadre de l'invention.

De même, le flux d'air peut être généré par d'autres systèmes, tels que micro haut-parleur étanche dont la membrane sonore agit comme une membrane de pompe. La cavité étanche placé contre le haut-parleur emprisonne un petit volume d'air qui est ensuite injecté dans le haut de l'embout de prélèvement 7.

De la même façon, il est possible d'utiliser tout système du type piézo-électrique qui peut remplir avantageusement la fonction de ce pompage.

L'invention ci-dessus exposée est utilisée comme système de détection du niveau d'un liquide à prélever 2. Il peut également avoir une autre fonctionnalité liée au bouchage total de l'embout de prélèvement 7, lors de l'affleurement de l'extrémité dudit embout avec le liquide. Ce système permet encore de détecter un bouchage partiel dudit embout de prélèvement 7, par exemple lorsqu'un liquide biologique 2 est séché ou cristallisé à l'une des extrémités ou également à l'intérieur de cet embout de prélèvement 7.

D'autres performances sont possibles grâce à cet appareil.

Ainsi on peut prévoir la détection de fuite à la jonction entre le cône de prélèvement et le mécanisme de prélèvement. En effet s'il y a une fuite en ce point, le signal de dépression recueilli aux bornes du capteur (de pression / dépression) 5 est totalement différent car le pic de dépression est plus faible, et le plateau lié à la hauteur de colonne d'eau s'effondre constamment au cours du temps. La pente de ce plateau traduit directement l'ampleur de la fuite.

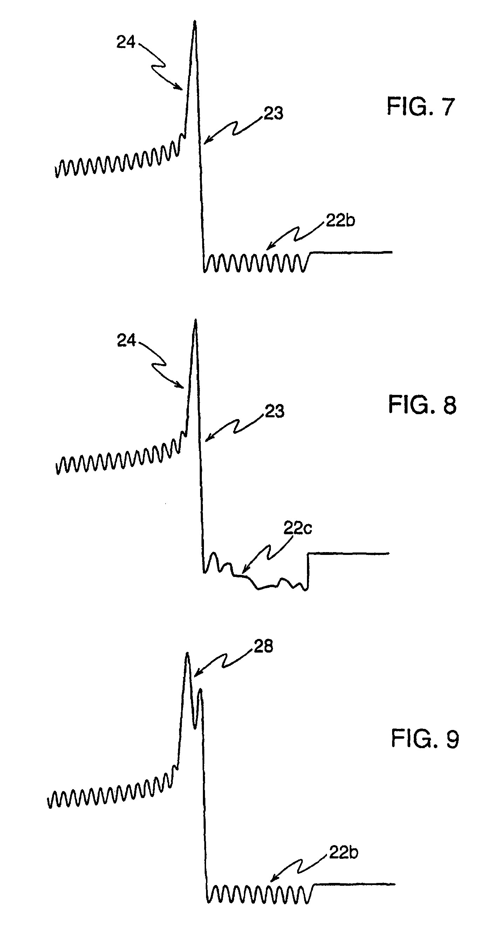

Il est également possible de détecter la présence de bulles lors de l'aspiration du liquide biologique puisque la dépression non progressive est détectée par le capteur. Dans ce cas le pic unique de dépression sera fractionné, 28 de la figure 9, et on pourra observer une pluralité de pics dont le nombre correspondra au nombre de bulles passant par l'orifice de la pointe de prélèvement. Le plateau d'équilibre des pressions sera lui aussi inconstant.

Il est encore possible de détecter un embout 7 imparfaitement vidé. Ainsi, lors du cycle d'éjection du liquide prélevé, la surpression générée par le mécanisme d'éjection de la pipette 3, s'il est trop rapide ou si le liquide a des caractéristiques de mouillabilité défavorable, va générer, sur les parois internes de l'embout de prélèvement 7, la présence d'une certaine quantité de liquide non éjecté, il y aura donc une sous dose distribuée. L'invention dans ce cas est capable de détecter la formation d'une coalescence du liquide ; cette coalescence génère au moins un anneau de liquide qui se comporte comme une membrane fragile. Le flux et le reflux du volume d'air éjecté dans l'embout 7 est donc perturbé, ce qui se traduit par une très faible variation de pression qui est détecté par le capteur de pression 5. Si dans le même temps, ledit embout 7 ne plonge pas dans le liquide à prélever 2, on peut en déduire que la pointe de prélèvement 7 est imparfaitement vidée, un deuxième cycle d'éjection dans ce cas peut être entrepris.

Il est aussi possible de détecter la présence d'un embout puisqu'en présence de l'embout vide, sans contact liquide, une onde alternative générée par le petit volume d'air injecté est décelable par le capteur de pression 5, alors qu'en l'absence de cet embout, ce signal n'existe pas. De plus et avantagement, si la pompe 4 est en fonctionnement continu et qu'il n'y a pas de cône 7 emboîté sur la pipette 3, il n'y a pas de signal. Un tel signal ne peut apparaître que lorsque le cône 7 est présent, ainsi on réalise une nouvelle fonction de détection de la présence de cône 7.

Il est possible de détecter un bouchage partiel. Ainsi les procédés de détection de bouchage sont connus et font l'objet de nombreux brevets de détection d'un bouchage total d'une aiguille ou d'une pointe de prélèvement. La présente invention propose un appareil qui fonctionne uniquement sur le matelas d'air au dessus de la colonne de liquide, ce qui augmente considérablement la sensibilité du capteur de pression qui est utilisé. Ainsi une faible obstruction de l'entrée du cône se traduit par une faible variation de la pression qui, comparée à un signal de cône non obturé, dévoile un bouchage partiel.

Il est également possible de qualifier les forces hydrostatiques. Avantageusement, de part son extrême sensibilité, l'appareil selon l'invention permet de suivre les qualités de mouillabilité de surfaces internes des cônes de prélèvement 7 ainsi que les tensions superficielles des différents liquides biologiques. En effet le pic de dépression sera d'autant plus élevé que le liquide sera peu mouillant et que la surface interne du cône 7 sera hydrophobe. A l'aide d'un ensemble de courbes maîtresses mémorisées dans l'ordinateur de gestion, il devient possible de qualifier les liquides biologiques sur ces nouveaux critères.

Il est encore possible de définir le cône ou embout. Sur un analyseur de biologie la qualité des embouts de prélèvement 7 a une grande importance puisque, pendant un temps très court, l'ensemble du prélèvement passe par son orifice capillaire. Ainsi les vitesses des liquides biologiques sont localement rapides, ce qui explique qu'une minime déformation de l'extrémité du cône de prélèvement modifie la vitesse du liquide, et donc la précision volumétrique attendue de l'instrument, notre invention rend discernable une faible variation de l'écoulement du liquide biologique, puisque l'écart de pression mesuré par le capteur de pression 5 sera comparé à des courbes maîtresses mémorisées.

Il est possible de contrôler la vitesse du prélèvement. Ainsi l'extrême sensibilité de l'invention associée à des courbes types de dépression/surpression permettent de déceler de faibles variations de vitesse de prélèvement, ce qui revêt une grande importance dans la précision volumétrique finale prélevée. Bien entendu ces éléments sont gérés par le calculateur de l'instrument bien connu de l'état de la technique.

Il est enfin possible de contrôler d'éventuelles fuites dans le mécanisme de prélèvement. L'appareil selon la présente invention est judicieusement positionné dans le corps de pompe 11 ; ainsi il est possible en l'absence de cône de prélèvement 7 de valider l'étanchéité dans l'intégralité des pièces contribuant au bon fonctionnement. La procédure de contrôle peut être exécutée avant la mise en route de l'analyseur par un bouchage artificiel de l'extrémité du porte-cône. Une surpression est générée par le mécanisme de pompage 4, au sein de la pipette 3, et le capteur de pression 5 surveille pendant un temps prolongé, par exemple une minute, la bonne tenue à cette pression générée.

L'invention concerne donc un procédé de détection de niveau de liquide par variation de pression utilisant un capteur de pression 5, associé à un flux d'air puisé, c'est-à-dire obtenu par injection d'un petit volume puis réaspiration de ce volume.

Le flux d'air est d'une fréquence de quelques Hertz à quelques centaines de Hertz.

Le volume d'air pulsé est une quantité variant de quelques nanolitres à quelques microlitres.

En ce qui concerne la présence de bulles d'air dans l'échantillon 2, les courbes 7 à 9 permettent de bien visualiser le problème.

Ainsi la figure 7 représente un signal électrique classique à la sortie du capteur de pression 5 visualisée par un oscilloscope. Ce signal se décompose de la façon suivante.

Il y a tout d'abord une ligne de base 21 qui correspond à la pression atmosphérique lorsque l'extrémité 8 est positionnée au-dessus de la surface libre 9. Puis le signal 22b correspond au fait que l'extrémité 8 est en contact de la surface libre 9 d'un liquide mouillant 2, avant aspiration. Ensuite une dépression 23 apparaît, due à la montée selon F1 du piston 19 entraînant la montée de l'échantillon 2 dans l'embout 7. Puis il y a une diminution de la dépression 24 due à la stabilisation de la position dudit échantillon 2 au sein dudit embout 7. Enfin, il s'établit une dépression d'équilibre 25 à un niveau correspondant de la colonne de liquide 2.

La figure 8 représente un signal électrique identique à celui de la figure 7 mais perturbé par la présence de nombreuses petites bulles à la surface de l'échantillon constituant une mousse. De ce fait en zone B, les variations engendrées par le moyen 4 sont beaucoup moins régulières 22c. Ceci est lié au fait que le capteur de pression 5 détecte alternativement la présence de liquide 2 et d'air. Dans ce cas le signal reprend les références 21, 23, 24 et 25 exposées ci-dessus mais pas la référence 22b remplacée par la référence 22c.

Enfin, la figure 9 représente une vue d'un signal électrique identique à la figure 7 mais également perturbé par la présence d'une bulle d'air à l'intérieur de l'échantillon, bulle d'air qui est aspiré par l'appareil d'aspiration-prélèvement au niveau de la zone C. Cette courbe comporte bien les références 21, 22b et 25, mais les références 23 et 24 sont absentes car remplacées par une dépression 28 de l'échantillon 2 dans l'embout 7 perturbée par une bulle d'air.

Cette invention permet de détecter des fuites entre le cône et la pipette, mais également la présence de bulles de gaz dans l'échantillon lors du prélèvement, des cônes imparfaitement vidés, la présence de cône, le bouchage partiel d'un cône par un réactif biologique. L'invention permet encore la qualification des forces hydrostatiques (tension superficielle / mouillabilité), la qualification du cône (géométrie / moulage de l'extrémité), le contrôle de vitesse de l'appareil de prélèvement, le contrôle de l'absence de fuite du mécanisme dudit appareil.

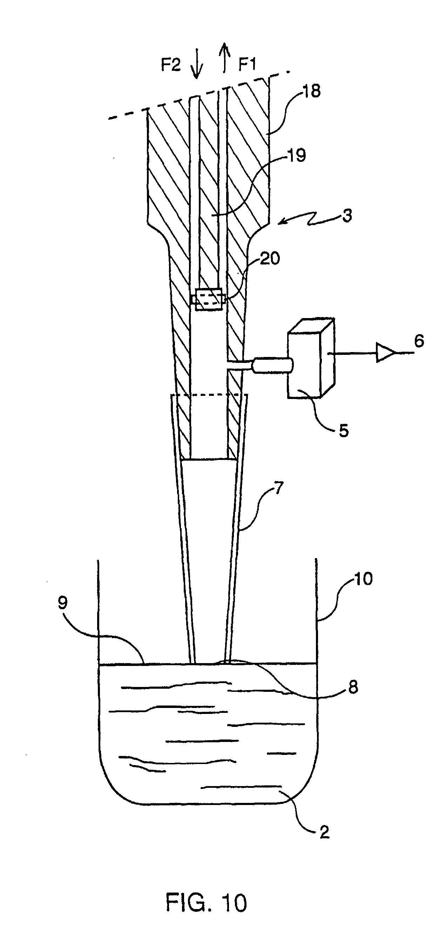

Selon un second mode de réalisation, la pipette 3 peut être de structure plus simple que la pipette représentée à la figure 1. Dans ce mode de réalisation, représenté à la figure 10, il n'y a pas de présence d'un moyen engendrant une variation de pression 4. Il y a simplement en position latérale, position qui n'est pas obligatoire, le capteur de pression 5 relié lui-même à des moyens d'analyse 6 des paramètres de mesure.

En fait, l'objet de cette invention réside dans l'utilisation du piston 19 pour créer un flux d'air continu et constant au niveau de l'embout 7. Pour se faire avant l'utilisation, le piston 19 est remonté au maximum selon F1. Dès que la pipette 3 est animée d'un mouvement automatique ou manuel la rapprochant d'un niveau à détecter, comme cela est bien représenté sur la figure 10, le piston 19 est animé du mouvement selon F2 afin de chasser, à l'extérieur de la pipette 3 et dudit embout 7, l'air contenu en leur sein. Cet air va donc s'évacuer au niveau de l'extrémité inférieure libre 8 dudit embout 7.

Tant que l'extrémité libre 8 ne vient pas en contact d'une surface liquide ou solide, il est bien évident que la pression mesurée par le capteur 5 sera constante. Néanmoins, dès que l'extrémité 8 sera au voisinage d'une surface 9, celle-ci aura tendance à obstruer plus ou moins complètement l'extrémité 8 et donc à faire augmenter la pression au sein de la pipette 3 et de l'embout 7. C'est cette variation de pression qu'il est intéressant de mesurer afin de détecter la présence d'une surface 9.

Comme on le voit bien sur les figures 11, 12 et 13, on est capable en fonction des signaux transmis par le capteur de pression 5 de déterminer la nature du liquide ou du solide situé en dessous. Bien entendu dans le cas d'un solide, il est tout à fait possible de faire une mesure de détection de la surface qui ne soit pas verticale comme c'est le cas avec les solides.

Selon la figure 11, on remarque que le signal est tout d'abord horizontal, sur la gauche de la figure, et correspond à la pression atmosphérique ou en tout cas à la pression subie par l'intérieur de la pipette 3 et de l'embout 7 sous l'effet du flux d'air engendré par le piston 19. A un moment donné, la droite est transformée en une courbe qui augmente et constitue un certain nombre de pics successifs. En fait, cette courbe correspond au fait que l'extrémité libre 8 de l'embout 7 est au niveau de la surface libre 9 du liquide à détecter 2. Les pics correspondent donc à la création de bulles d'air au sein du liquide.

Il est bien évident que si la surface en contact avait été un solide, il y aurait eu également une augmentation de pression puis un plateau de pression élevée montrant qu'il n'y avait pas de possibilité de formation de bulles, c'est ce qui est bien représenté en figure 13.

Dans le cas de la figure 12, par contre, on remarque deux premiers pics qui sont caractéristiques puisqu'ils sont suivis par un plateau descendant aboutissant sensiblement à un retour à la pression atmosphérique. Chacune de ces pics, suivi d'un plateau, correspond en fait à la présence d'une bulle qui nécessite une augmentation de pression au début, puis une diminution de pression correspondant au gonflement de la bulle et enfin à un retour à la pression atmosphérique, après l'éclatement de ladite bulle. Dans le cas particulier de cette figure 12, il est donc facile de comprendre que l'embout 7 est animé d'un mouvement vertical descendant très faible, qui lui a permis de rentrer en contact avec une première bulle, de la faire gonfler, de la faire exploser puis de rentrer en contact avec une seconde bulle, de la faire également gonfler et exploser et enfin de rentrer en contact avec le liquide, ce qui se traduit, à la droite de la courbe de la figure 12, par un certain nombre de pics successifs ressemblants en tous points à ceux de la figure 11.

Il est donc possible en fonction de la nature du tracé obtenu par l'oscilloscope, via le capteur de pression 5, de déterminer qu'elle est la nature exacte de la surface rencontrée. Il peut donc s'agir d'une surface solide ou d'une surface liquide. Dans ce second cas, il y a deux options, soit il y a présence de bulles à la surface libre du liquide soit il n'y a pas de bulles à cette surface.

Il est tout à fait possible également de détecter la présence de bulles sur une surface solide. Dans cette hypothèse, le signal transmis par le capteur 5 associera le début du signal de la figure 12 avec le signal de la figure 13.

On peut donc aisément utiliser cette invention pour détecter des surfaces ce qui peut être particulièrement intéressant pour éviter d'avoir à acheter des systèmes beaucoup plus complexes, du style lasers ou détecteurs optiques, qui sont beaucoup plus onéreux.

### REFERENCES

1. Appareil de prélèvement
2. Echantillon biologique
3. Pipette
4. Moyen engendrant une variation de pression ou pompe
5. Capteur de pression
6. Moyens d'analyse des paramètres de mesure
7. Embout ou cône ou pointe
8. Extrémité inférieure libre de l'embout 7
9. Surface libre de l'échantillon 2
10. Cuvette d'analyse contenant l'échantillon 2
11. Tube souple
12. Support
13. Vilebrequin
14. Bielle
15. Galet presseur
16. Enclume
17. Bouchon
18. Corps de la pipette 3
19. Piston de la pipette 3
20. Joints d'étanchéité
21. Ligne de base du signal correspondant à la pression atmosphérique lorsque l'extrémité 8 est positionnée au dessus de la surface libre 9
22a. Signal lorsque l'extrémité 8 est en contact de la surface libre 9 d'un liquide non mouillant avant aspiration
22b. Signal lorsque l'extrémité 8 est en contact de la surface libre 9 d'un liquide mouillant avant aspiration
22c. Signal lorsque l'extrémité 8 est en contact de la surface libre 9 d'un liquide mouillant avant aspiration, la surface de l'échantillon 2 comportant de la mousse
23. Dépression due à la montée selon F1 du piston 19 entraînant la montée de l'échantillon dans l'embout 7
24. Diminution de la dépression due à la stabilisation de la position de l'échantillon 2 au sein de l'embout 7
25. Dépression d'équilibre à un niveau correspondant de la colonne de liquide 2
26. Surface libre de l'échantillon 2 au sein de la pipette 3 dans le cas d'un liquide non mouillant
27. Surface libre de l'échantillon 2 au sein de la pipette 3 dans le cas d'un liquide mouillant
28. Montée de l'échantillon 2 dans l'embout 7 perturbée par une bulle d'air

A. Signal électrique à la sortie du capteur 5 avant contact entre l'extrémité 8 et l'échantillon 2
B. Signal du capteur 5 après contact entre l'extrémité 8 et l'échantillon 2 avant aspiration
C. Signal du capteur 5 après contact entre l'extrémité 8 et l'échantillon 2 après aspiration
F1. Mouvement du piston 19 dans le corps 18 de la pipette 3 permettant l'aspiration
F2. Mouvement du piston 19 dans le corps 18 de la pipette 3 permettant l'éjection
F3. Mouvement de rotation du vilebrequin 13
F4. Mouvement de compression du tuyau 11 par le galet presseur 15
F5. Mouvement de dépression du tuyau 11 par le galet presseur 15

## Revendications

1. Procédé de prélèvement d'un échantillon biologique par l'intermédiaire d'un appareil d'aspiration-refoulement manuel ou automatique, incorporé ou non à un automate, qui consiste :
- à actionner un moyen engendrant une variation de pression et/ou un flux d'air au sein de l'appareil,
- à positionner l'extrémité inférieure libre dudit appareil d'aspiration-refoulement de manière à ce qu'elle affleure la surface libre de l'échantillon biologique,
- à détecter la variation de pression et/ou un flux d'air au sein de l'appareil, cette détection correspondant à l'affleurement de l'extrémité inférieure dudit appareil à la surface libre de l'échantillon biologique, et
- à prélever une quantité dudit échantillon par aspiration au moyen de l'appareil en position d'affleurement empêchant ainsi que les parois latérales extérieures de l'appareil ne soient souillées par ledit échantillon autrement que par ce qui est dû au caractère plus ou moins mouillant dudit échantillon.

2. Procédé, selon la revendication 1, **caractérisé en ce que** la variation de volume aspiré-refoulé est comprise entre quelques nanolitres (nl) et quelques microlitres (µl), et/ou la variation constante de pression, autrement appelée fréquence, est comprise entre quelques Hertz et quelques centaines de Hertz (Hz).

3. Procédé, selon l'une quelconque des revendications 1 ou 2, **caractérisé en ce que** le flux d'air est compris entre 10 et 50 µl par seconde, et préférentiellement de 20 à 30 µl par seconde.

4. Appareil manuel ou automatique de prélèvement (1) d'un échantillon biologique (2), incorporé ou non à un automate, qui comporte :
- au moins un moyen engendrant une variation de pression (4) ou un flux d'air (19) au sein de l'appareil (1) au repos, et
- au moins un capteur de pression (5) pour détecter, d'une part la variation de pression au repos ou une pression différente de cette variation de pression ou, d'autre part, une pression différente de la pression créée par le flux d'air, au sein de l'appareil (1),
**caractérisé par le fait qu'**il comporte également des moyens d'analyse (6) des signaux fournis par le ou les capteurs (5) pour permettre le prélèvement, lorsque l'extrémité inférieure libre (8) dudit appareil d'aspiration-refoulement affleure la surface libre (9) de l'échantillon biologique (2), sans que les parois latérales extérieures de l'appareil (1) ne soient souillées par ledit échantillon (2) autrement que par ce qui est dû éventuellement au caractère plus ou moins mouillant dudit échantillon.

5. Appareil, selon la revendication 4, automatique, **caractérisé par le fait que** le moyen engendrant une variation de pression (4) est constitué par un tube souple (11) pouvant être compressé et décompressé régulièrement par tout mécanisme (12 à 17) de mouvement alternatif.

6. Appareil, selon la revendication 4, **caractérisé par le fait que** le moyen engendrant le flux d'air (19) est constitué par le piston (19) de la pipette (3), lorsque celui-ci éjecte l'air à l'extérieur de ladite pipette (3).

7. Appareil, selon l'une quelconque des revendications 4 à 6, **caractérisé par le fait que** l'extrémité inférieure libre (8) de l'appareil (1) est constituée par un embout jetable (7).

8. Procédé de détection d'un bouchage partiel ou total au niveau d'un appareil manuel ou automatique de prélèvement (1) d'un échantillon biologique (2), selon l'une des revendications 4 à 7 consistant :
- à actionner un moyen engendrant une variation de pression et/ou un flux d'air au sein de l'appareil, et
- à mesurer une variation de pression différente de la variation de pression normale au sein de l'appareil due au bouchage partiel ou total de l'extrémité inférieure libre dudit appareil.

## Patentansprüche

1. Verfahren zur Entnahme einer biologischen Probe über eine manuelle oder automatische Saug- und Pumpvorrichtung, die in einen Automaten integriert ist oder nicht, das darin besteht,
- dass ein Mittel betätigt wird, das eine Druckänderung und/oder einen Luftstrom im Inneren der Vorrichtung erzeugt,
- dass das freie untere Ende der Saug- und Pumpvorrichtung so positioniert wird, dass es mit der freien Oberfläche der biologischen Probe bündig ist,
- dass die Druckänderung und/oder ein Luftstrom in Inneren der Vorrichtung erfasst wird, wobei diese Erfassung dem Bündigsein des unteren Endes der Vorrichtung mit der freien Oberfläche der biologischen Probe entspricht, und
- dass eine Menge dieser Probe mit Hilfe der Vorrichtung in bündiger Stellung durch Absaugung entnommen wird, was verhindert, dass die äußeren Seitenwände der Vorrichtung durch die Probe anders verunreinigt werden als durch das, was durch den mehr oder weniger benetzenden Charakter der Probe verursacht wird.

2. Verfahren nach Anspruch 1, **dadurch gekennzeichnet, dass** die Änderung des angesaugten und gepumpten Volumens zwischen einigen Nanolitern (nl) und einigen Mikrolitern (µl) beträgt und/oder die ständige Druckänderung, mit anderen Worten die Frequenz, zwischen einigen Hertz und einigen Hunderten Hertz (Hz) beträgt.

3. Verfahren nach einem der Ansprüche 1 oder 2, **dadurch gekennzeichnet, dass** der Luftstrom zwischen 10 und 50 µl pro Sekunde und vorzugsweise 20 bis 30 µl pro Sekunde beträgt.

4. Vorrichtung (1), die in einen Automaten integriert ist oder nicht, zur manuellen oder automatischen Entnahme einer biologischen Probe (2), umfassend:
- mindestens ein Mittel, das eine Druckänderung (4) oder einen Luftstrom (19) im Inneren der Vorrichtung (1) im Ruhezustand erzeugt, und
- mindestens einen Druckfühler (5) zum Erfassen einerseits der Druckänderung im Ruhezustand oder eines von dieser Druckänderung abweichenden Drucks oder andererseits eines Drucks, der von dem durch den Luftstrom erzeugten Druck im Inneren der Vorrichtung (1) abweicht,
**dadurch gekennzeichnet, dass** sie ferner Mittel (6) zur Analyse der von dem oder den Fühlern (5) gelieferten Signale aufweist, um die Entnahme zu gestatten, wenn das freie untere Ende (8) der Saug- und Pumpvorrichtung mit der freien Oberfläche (9) der biologischen Probe (2) bündig ist, ohne dass die äußeren Seitenwande der Vorrichtung (1) durch die Probe (2) anders als durch das verschmutzt sind, was ggf. durch den mehr oder weniger benetzenden Charakter der Probe verursacht wird.

5. Automatische Vorrichtung nach Anspruch 4, **dadurch gekennzeichnet, dass** das eine Druckänderung erzeugende Mittel (4) aus einem Schlauch (11) besteht, der durch jeden Hinund Herbewegungsmechanismus (12-17) regelmäßig komprimiert und dekomprimiert werden kann.

6. Vorrichtung nach Anspruch 4, **dadurch gekennzeichnet, dass** das den Luftstrom erzeugende Mittel (19) aus dem Kolben (19) der Pipette (3) besteht, wenn dieser die Luft aus der Pipette (3) nach außen ausstößt.

7. Vorrichtung nach einem der Ansprüche 4 bis 6, **dadurch gekennzeichnet, dass** das freie untere Ende (8) der Vorrichtung (1) aus einem Einwegaufsatz (7) besteht.

8. Verfahren zum Erfassen einer partiellen oder vollständigen Verstopfung im Bereich einer manuellen oder automatischen Vorrichtung (1) zur Entnahme einer biologischen Probe (2) nach einem der Ansprüche 4 bis 7, das darin besteht,
- dass ein Mittel betätigt wird, das eine Druckänderung und/oder einen Luftstrom im Inneren der Vorrichtung erzeugt, und
- dass eine Druckänderung gemessen wird, die von der normalen Druckänderung im Inneren der Vorrichtung abweicht und die durch eine partielle oder vollständige Verstopfung des freien unteren Endes der Vorrichtung verursacht wird.

## Claims

1. A method for drawing a biological sample using a manual or automatic suction-discharge device, built into an automated device or not, which consists in:
- actuating a means creating a pressure variation and/or a flow of air within the device,
- positioning the lower free end of said suction-discharge device in such a way that it is flush with the free surface of the biological sample,
- detecting the pressure variation and/or a flow of air within the device, this detection corresponding to the flushness of the lower surface of said device with the free surface of the biological sample, and
- drawing a quantity of said sample by suction by means of the device in flushness position thus preventing the outside side walls of the device from becoming "soiled" by said sample other than by what is due to the more or less wetting character of said sample.

2. The method according to claim 1, **characterized in that** the suction-discharge volume variation ranges from a few nanoliters (nl) to a few microliters (µl), and/or the constant pressure variation, otherwise referred to as frequency, ranges from a few Hertz to a few hundred Hertz (Hz).

3. The method according to either of claims 1 or 2, **characterized in that** air flow ranges from 10 to 50µl per second, and preferably from 20 to 30µl per second.

4. A manual or automatic sampling device (1) used to draw a biological sample (2), built into an automated device or not, which features:
- at least a means that creates a pressure variation (4) or a flow of air (19) within the device (1) when not operating, and
- at least a pressure sensor (5) for detecting the pressure variation when not operating or a pressure different from this pressure variation, on the one hand, or a pressure different from the pressure created by the air flow within the device (1), on the other hand,
**characterized by** the fact that it also features means (6) for analyzing signals provided by the sensor(s) (5) to enable the sampling operation, when the lower free end (8) of said suction-discharge device comes into contact with the free surface (9) of the biological sample (2), without the outside side walls of the device (1) becoming soiled by said sample (2) other than by what is possibly due to the more or less wetting character of said sample.

5. The automatic device according to claim 4, **characterized by** the fact that the means that creates a pressure variation (4) consists of a flexible tube (11) which can be compressed and decompressed regularly by any mechanism (12 to 17) creating an alternating movement.

6. The device according to claim 4, **characterized by** the fact that the means that creates the air flow (19) consists of a piston (19) of the pipette (3), when the piston (19) expels the air to the outside of said pipette (3).

7. The device according to any if claims 4 to 6, **characterized by** the fact that the lower free end (8) of the device (1) consists of a disposable tip (7).

8. A method for detecting a partial or total blockage at the level of a manual or automatic biological sample (2) drawing device (1) according to one of the claims 4 to 7 which consists in:
- actuating a means that creates a pressure variation and/or a flow of air within the device, and
- measuring a pressure variation different from the normal pressure variation within the device due to the partial or total blockage of the lower free end of said device.
